# EUROPÄISCHE PATENTSCHRIFT

(11) **EP 1 704 807 B1**
(45) Veröffentlichungstag und Bekanntmachung des Hinweises auf die Patenterteilung: **16.01.2008**
(21) Anmeldenummer: 06101231.6
(22) Anmeldetag: 02.02.2006
(51) Int. Cl.: A47L 9/12

(54) **Filter mit einer Filterpatrone und einem Vorfilter**
Filter comprising a cartridge and a prefilter
Filtre comportant une cartouche et un prefiltre

(30) Priorität: 26.03.2005 DE 202005004873 U
(43) Veröffentlichungstag der Anmeldung: 27.09.2006
(73) Patentinhaber: MELITTA HAUSHALTSPRODUKTE GmbH & Co. Kommanditgesellschaft, D-32427 Minden (DE)
(72) Erfinder: Czado, Wolfgang, 32429 Minden (DE); Strathmann, Werner, 32425 Minden (DE)
(74) Vertreter: Dantz, Jan Henning

(56) Entgegenhaltungen:
- US-A- 5 669 949
- US-A- 5 858 044
- US-A1- 2004 261 382
- US-B1- 6 219 880

## Beschreibung

Die vorliegende Erfindung betrifft einen Filter, insbesondere für Staubsauger, mit einer Filterpatrone, die einen von einem Fluid durchströmbaren Filterkörper aufweist, der in eine Filterkammer eines Gerätes einfügbar ist.

Es gibt Filter für beutellose Staubsauger und Akkusauger, die in regelmäßigen Abständen gereinigt werden müssen. Denn die Filter setzen sich relativ schnell zu, wodurch die Saugleistung nachlässt. Bei der Reinigung wird der Filter manuell unter unhygienischen Bedingungen aus einer Filterkammer eines Gerätes entfernt und nach der Reinigung wieder eingesetzt. Der Reinigungsvorgang ist vergleichsweise unangenehm und muss in kurzen Abständen erfolgen.

Die US 6219880 offenbart einen Filter für einen Staubsauger, der als Nasssauger ausgebildet ist und eine Filtervorrichtung mit einem Drainagerohr aufweist. Die Filtervorrichtung besitzt einen Vorfilter, der taschenförmig ausgebildet ist und um eine Filterpatrone festlegbar ist. Hierfür sind elastische Bänder, Haken oder andere Befestigungsmittel vorgesehen. Integral mit dem Vorfilter ist ein Drainagerohr ausgebildet.

Es ist daher die Aufgabe der vorliegenden Erfindung einen Filter, insbesondere für einen Staubsauger, zu schaffen, der gute Filtereigenschaften besitzt und leichter zu reinigen ist.

Diese Aufgabe wird mit einem Filter mit den Merkmalen des Anspruchs 1 gelöst.

Erfindungsgemäß ist um den Filterkörper ein dehnbarer Vorfilter angeordnet. Dieser Vorfilter kann nach dem Gebrauch einfach und schnell von dem Filterkörper entfernt werden, was im Umgang hygienischer ist. Zudem verstopft der relativ teure Filterkörper langsamer, was zu einer längeren Nutzungsdauer und somit einer Kosteneinsparung führt. Durch die Verwendung eines dehnbaren Vorfilters ist es möglich, unterschiedliche Baugrößen von Filterkörpern mit dem selben Vorfilter abzudecken. Zudem erleichtert die Dehnbarkeit des Vorfilters die Handhabung und gewährleistet zudem eine gute Passform und Dichtigkeit des Vorfilters an dem Filterkörper.

Gemäß der Erfindung ist der Vorfilter schlauchförmig über den Filterkörper gezogen. Dadurch wird der Umfang des Filters kaum vergrößert und es ist keine Anpassung einer Filterkammer wegen des zusätzlichen Einsatzes des dehnbaren Vorfilters erforderlich. Zudem lässt sich der schlauchförmige Vorfilter kostengünstig herstellen und in unterschiedlichen Längen an den jeweiligen Filterkörper anpassen.

Der Vorfilter weist eine Dehnbarkeit von mehr als 10 %, vorzugsweise mehr als 20 % auf, so dass er an unterschiedliche Filterkörper angepasst werden kann. Dies vereinfacht auch die Handhabung, wenn dieser über den Filterkörper einfach gezogen werden kann.

Vorzugsweise ist der Vorfilter aus einem textilen Gewebe hergestellt. Das textile Gewebe kann dabei als Grobfilter dienen, der eine hohe Luftdurchlässigkeit aufweist. Denn durch den Vorfilter soll die Saugleistung nur geringfügig vermindert werden, aber durch die Abscheidung grober Partikel soll die Verstopfung des Filterkörpers langsamer erfolgen.

Der Filter kann eine Filterpatrone mit einem zylindrischen Filterkörper umfassen, der auf einer Grundplatte festgelegt ist. Dadurch ist die Handhabung des Filters äußerst einfach, da der Filter an der Grundplatte aus der Filterkammer gezogen und in diese eingefügt werden kann. Der dehnbare Vorfilter kann je nach Bedarf beim Reinigungsvorgang entfernt und ausgewechselt werden.

Die Erfindung wird nachfolgend anhand eines Ausführungsbeispieles mit Bezug auf die beigefügten Zeichnungen mehr erläutert.

Es zeigen:
- Figur 1: eine perspektivische Ansicht eines erfindungsgemäßen Filters bei der Montage, und
- Figur 2: eine perspektivische Ansicht des montierten Filters

Eine Filterpatrone 1 umfasst einen zylindrischen Filterkörper 2, der beispielsweise einen Durchmesser zwischen 5 und 9 cm und eine Höhe zwischen 8 und 20 cm besitzen kann. Der Filterkörper 2 ist aus einem steifen synthetischen Filtermedium gebildet, das in Faltenform auf einer runden Kunststoffgrundplatte 3 mit Harz eingegossen ist. Die Filterpatrone 1 ist somit ein steifes Gebilde, das in eine Filterkammer eines Gerätes, wie einem Staubsauger eingefügt werden kann. Auch an der Oberseite des Filterkörpers 2 ist eine Platte 4 vorgesehen, die ebenfalls aus Kunststoff hergestellt ist und mit dem plissiertem Filtermedium vergossen ist.

Die so gebildete Filterpatrone 1 wird durch einen dehnbaren Vorfilter 5 überzogen, der aus einem schlauchförmigen textilem Material gebildet ist. Die Dehnbarkeit erstreckt sich insbesondere in Umfangsrichtung, wie dies mit dem Pfeil 6 dargestellt ist. In diese Richtung weist der Vorfilter 5 eine Dehnbarkeit von vorzugsweise mehr als 10 %, beispielsweise rund 20 bis 50 % auf, so dass der Vorfilter 5 an unterschiedliche Durchmesser einer Filterpatrone 1 angepasst werden kann. Der Vorfilter 5 weist eine obere Öffnung 7 auf, die bei Bedarf auch verschlossen werden kann, wobei in dem gezeigten Ausführungsbeispiel die Durchströmung der Filterpatrone 1 nur am Umfang des Filterkörpers 2 erfolgt, so dass der Vorfilter 5 an den Stirnseiten offen ausgebildet sein kann. Andernfalls könnte die Öffnung 7 des Vorfilters 5 verschweißt sein.

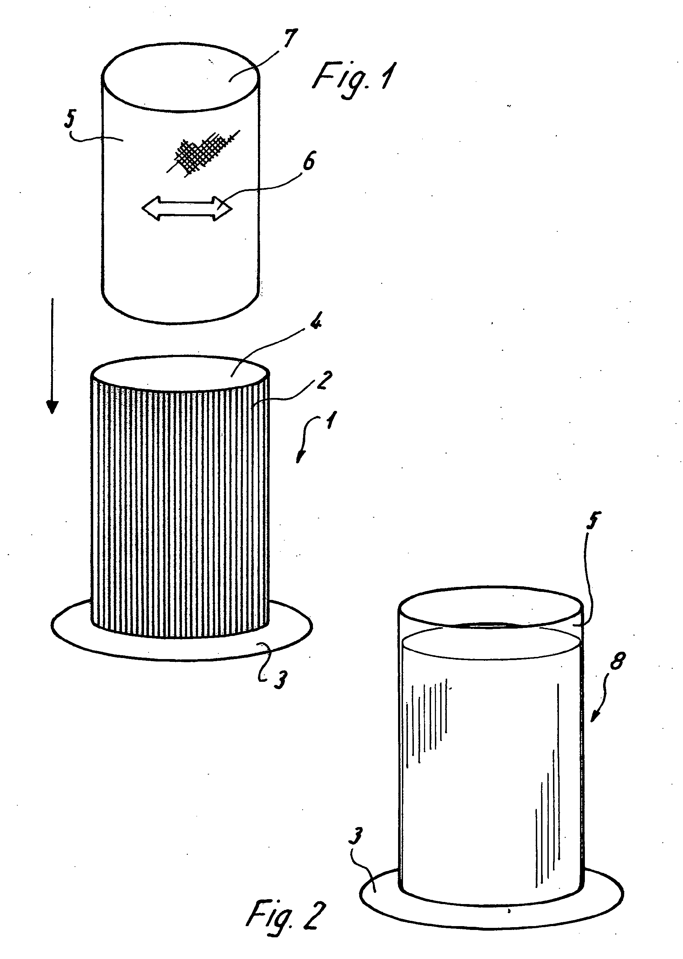

Wie in Figur 2 dargestellt ist, wird der Vorfilter 5 aus dem dehnbaren Material über den Filterkörper 2 gezogen und liegt mit einem Ende an der Grundplatte 3 an. Der Vorfilter 5 kann an der gegenüber liegenden Seite geringfügig über den Filterkörper 2 vorstehen, so dass das Abziehen von der Filterpatrone 1 erleichtert wird.

Der Vorfilter ist aus einem luftdurchlässigen Material gebildet und besitzt nur eine geringe Filterleistung, die sich auf groben Schmutz beschränkt. Das Filtermaterial des Vorfilters weist vorteilhaft eine Dicke von < 3 mm, bevorzugt < 1 mm auf, so dass die Geometrie der Filterpatrone 1 kaum verändert wird und keine Anpassung der Filterkammer an dem Gerät erfolgen muss.

Es können für den Vorfilter auch andere Filtermedien wie Siebgewebe, Vliesstoffe, Elektret Filtermedien, Spunbond und Meltblow Vliese sowie Composite eingesetzt werden.

In dem gezeigten Ausführungsbeispiel ist ein zylinderförmiger Filterkörper gezeigt. Es ist natürlich auch möglich, den Vorfilter bei anderen Geometrien des Filterkörpers einzusetzen, beispielsweise bei Rundfiltern, Filterkerzen und bei anderen Filterpatronen.

## Patentansprüche

1. Filter, insbesondere für Staubsauger, mit einer Filterpatrone (1), die einem von einem Fluid durchströmbaren Filterkörper (2) aufweist, der in eine Filterkammer eines Gerätes einfügbar ist, wobei um den Filterkörper (2) ein dehnbarer Vorfilter (5) angeordnet ist, **dadurch gekennzeichnet, dass** der Vorfilter (5) schlauchförmig über den Filterkörper (2) gezogen ist und dabei um mehr als 10 % gedehnt ist

2. Filter nach Anspruch 1, **dadurch gekennzeichnet, dass** der Vorfilter (5) um mehr als 20 % gedehnt ist.

3. Filter nach Anspruch 1 oder 2, **dadurch gekennzeichnet, dass** der Vorfilter (5) aus einem textilen Gewebe, einem Siebgewebe, einem Vliesstoff, aus Elektret Filtermedien, einem Spunbond, einem Meltblow Vlies oder einer Mischung der genannten Materialien hergestellt ist.

4. Filter nach einem der Ansprüche 1 bis 3, **dadurch gekennzeichnet, dass** die Filterpatrone (1) einen zylindrischen Filterkörper (2) umfasst, der auf einer Grundplatte (3) festgelegt ist.

5. Filter nach einem der Ansprüche 1 bis 4, **dadurch gekennzeichnet, dass** der Vorfilter (5) als Grobfilter mit einer hohen Luftdurchlässigkeit ausgebildet ist.

## Claims

1. Filter, in particular for vacuum cleaners, having a filter cartridge (1) which has a filter body (2) which can have a fluid flowing through it and which can be introduced into a filter chamber of an appliance, an expansible prefilter (5) being arranged around the filter body (2), **characterized in that** the prefilter (5) is drawn, in tubular form, over the filter body (2) and, in the process, is expanded by more than 10%.

2. Filter according to Claim 1, **characterized in that** the prefilter (5) is expanded by more than 20%.

3. Filter according to Claim 1 or 2, **characterized in that** the prefilter (5) is produced from a textile fabric, a screen fabric, a nonwoven, from electret filter media, from a spunbonded fabric, a meltblown nonwoven or from a mixture of the materials mentioned.

4. Filter according to one of Claims 1 to 3, **characterized in that** the filter cartridge (1) comprises a cylindrical filter body (2) which is secured on a base plate (3).

5. Filter according to one of Claims 1 to 4, **characterized in that** the prefilter (5) is designed as a roughing filter with a high level of air permeability.

## Revendications

1. Filtre, en particulier pour aspirateur, comprenant une cartouche de filtre (1) présentant un corps formant filtre (2), susceptible d'être traversé par un fluide, qui peut être introduit dans une chambre à filtre d'un appareil, un préfiltre (5) étirable étant disposé autour du corps formant filtre (2), **caractérisé en ce que** le préfiltre (5) est tendu sur le corps formant filtre (2) à la façon d'un tube et est alors étendu de plus de 10 %.

2. Filtre selon la revendication 1, **caractérisé en ce que** le préfiltre (5) est étendu de plus de 20 %.

3. Filtre selon la revendication 1 ou 2, **caractérisé en ce que** le préfiltre (5) est fabriqué en tissu textile, en toile à tamis, en tissu non-tissé, en matériau pour filtre Electret, en filé-lié, en non-tissé obtenu par le procédé Meltblown ou en un mélange de ces matériaux.

4. Filtre selon l'une des revendications 1 à 3, **caractérisé en ce que** la cartouche de filtre (1) comprend un corps formant filtre (2) cylindrique, qui est fixé sur une plaque de base (3).

5. Filtre selon l'une des revendications 1 à 4, **caractérisé en ce que** le préfiltre (5) est conformé en filtre grossier présentant une grande perméabilité à l'air.
